# EUROPEAN PATENT APPLICATION

(11) **EP 4 492 323 A1**
(43) Date of publication of application: **15.01.2025**
(21) Application number: 22930892.9
(22) Date of filing: 11.03.2022
(51) Int. Cl.: G06T 7/00, G06T 7/60, G06F 21/32

(54) **AUTHENTICATION DEVICE, AUTHENTICATION METHOD, AND RECORDING MEDIUM**

(71) Applicant: NEC Corporation, 108-8001 Tokyo (JP)
(72) Inventor: TAKAHASHI, Daiki, Tokyo 108-8001 (JP); KUSUNOKI, Takeshi, Tokyo 108-8001 (JP)
(74) Representative: Betten & Resch
(86) International application number: PCT/JP2022/010872
(87) International publication number: WO 2023/170911

(57) **Abstract**

An authentication apparatus includes: an authentication unit that authenticates a person, by using a first image that is generated by an imaging apparatus imaging the person before the person enters a target area; and a counting unit that performs counting processing for counting a number of persons staying in the target area, by using a second image that is generated by the imaging apparatus imaging the persons entering and leaving the target area.

## Description

### Technical Field

This disclosure relates to, for example, technical fields of an authentication apparatus, an authentication method, and a recording medium that are configured to authenticate a person.

### Background Art

Patent Literature 1 describes an example of the authentication apparatus that is configured to authenticate a person. Specifically, Patent Literature 1 describes an entry/exit management system that manages/controls a person entering or leaving a security-managed section, by face authentication of a camera image, as the authentication apparatus that is configured to authenticate a person. In addition, as prior art literatures related to this disclosure, Patent Literatures 2 to 5 are cited.

### Citation List

### Patent Literature

Patent Literature 1: JP2021-086346A
Patent Literature 2: JP2010-225067A
Patent Literature 3: JP2010-077647A
Patent Literature 4: JP2005-146709A
Patent Literature 5: JP2021-140355A

### Summary

### Technical Problem

It is an example object of this disclosure to provide an authentication apparatus, an authentication method, and a recording medium that are intended to improve the techniques/technologies described in Citation List.

### Solution to Problem

An authentication apparatus according to an example aspect of this disclosure includes: an authentication unit that authenticates a person, by using a first image that is generated by an imaging apparatus imaging the person before the person enters a target area; and a counting unit that performs counting processing for counting a number of persons staying in the target area, by using a second image that is generated by the imaging apparatus imaging the persons entering and leaving the target area.

An authentication method according to an example aspect of this disclosure includes: authenticating a person, by using a first image that is generated by an imaging apparatus imaging the person before the person enters a target area; and counting a number of persons staying in the target area, by using a second image that is generated by the imaging apparatus imaging the persons entering and leaving the target area.

A recording medium according to an example aspect of this disclosure is a recording medium on which a computer program that allows a computer to execute an authentication method is recorded, the authentication method including: authenticating a person, by using a first image that is generated by an imaging apparatus imaging the person before the person enters a target area; and counting a number of persons staying in the target area, by using a second image that is generated by the imaging apparatus imaging the persons entering and leaving the target area.

### Brief Description of Drawings

[FIG. 1] FIG. 1 is a block diagram illustrating a configuration of an authentication apparatus in a first example embodiment.
[FIG. 2] FIG. 2 is a block diagram illustrating an entire configuration of an authentication system in a second example embodiment.
[FIG. 3] FIG. 3 is a plan view illustrating a guest room in which the authentication system in the second example embodiment is applied.
[FIG. 4] FIG. 4 is a plan view illustrating a guest room in which the authentication system in the second example embodiment is applied.
[FIG. 5] FIG. 5 is a plan view illustrating a guest room in which the authentication system in the second example embodiment is applied.
[FIG. 6] FIG. 6 is a plan view illustrating a user passing through an entrance/exit of the guest room to enter the guest room.
[FIG. 7] FIG. 7 is a plan view illustrating a user passing through the entrance/exit of the guest room to leave the guest room.
[FIG. 8] FIG. 8 is a block diagram illustrating a configuration of an authentication apparatus in the second example embodiment.
[FIG. 9] FIG. 9 is a block diagram illustrating a configuration of a management server in the second example embodiment.
[FIG. 10] FIG. 10 is a data structure diagram illustrating a data structure of a management DB (Database).
[FIG. 11] FIG. 11 is a flowchart illustrating a flow of a counting operation performed by the authentication apparatus in the second example embodiment.

### Description of Example Embodiments

Hereinafter, with reference to the drawings, an authentication apparatus, an authentication method, and a recording medium according to example embodiments will be described.

### (1) First Example Embodiment

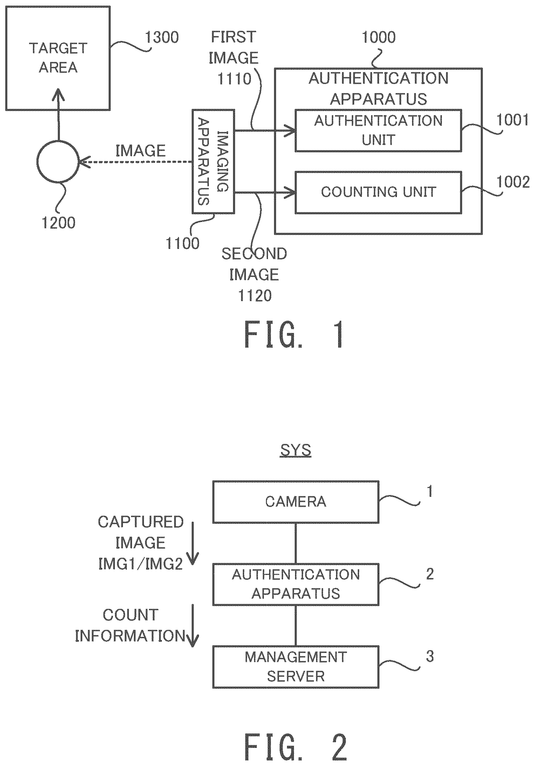

First, an authentication apparatus, an authentication method, and a recording medium in a first example embodiment will be described. With reference to FIG. 1, the following describes the authentication apparatus, the authentication method, and the recording medium in the first example embodiment, by using an authentication apparatus 1000 to which the authentication apparatus, the authentication method, and the recording medium in the first example embodiment are applied. FIG. 1 is a block diagram illustrating a configuration of the authentication apparatus 1000 in the first example embodiment.

As illustrated in FIG. 1, the authentication apparatus 1000 in the first example embodiment includes an authentication unit 1001 that is a specific example of the "authentication unit" described in Supplementary Note later, and a counting unit 1002 that is a specific example of the "counting unit" described in Supplementary Note later. The authentication unit 1001 authenticates a person 1200 entering a target area 1300. Specifically, the authentication unit 1001 authenticates the person 1200, by using a first image 1110 that is generated by the imaging apparatus 1100 imaging the person 1200 before the person 1200 enters the target area 1300. As an example, the authentication unit 1001 may perform face authentication of authenticating the person 1200, by using information about a face of the person 1200 captured in the first image 1110. The counting unit 1002 performs counting processing of counting the number of the persons 1200 staying in the target area 1300. Specifically, the counting unit 1002 performs the counting processing by using a second image 1120 that is generated by the imaging apparatus 1100 imaging the person 1200 entering or leaving the target area 1300.

The authentication apparatus 1000 in the first example embodiment described above is capable of performing the counting processing of counting the number of people staying in the target area 1300, by using the imaging apparatus 1100 used to authenticate the person 1200. Therefore, the authentication apparatus 1000 may include a special apparatus that is different from the imaging apparatus 1100 in order to perform the counting processing. Therefore, the authentication apparatus 1000 is capable of enjoying the effect/advantage that it is possible to reduce a cost of the authentication apparatus 1000.

### (2) Second Example Embodiment

Next, an authentication apparatus, an authentication method, and a recording medium in a second example embodiment will be described. The following describes the authentication apparatus, the authentication method, and the recording medium in the second example embodiment, by using an authentication system SYS to which the authentication apparatus, the authentication method, and the recording medium in the second example embodiment are applied.

### (2-1) Configuration of Authentication System SYS

First, with reference to FIG. 2, an overall configuration of the authentication system SYS in the second example embodiment will be described. FIG. 2 is a block diagram illustrating the overall configuration of the authentication system SYS in the second example embodiment.

As illustrated in FIG. 2, the authentication system SYS includes a camera 1 that is a specific example of the "imaging apparatus" described in Supplementary Note later, an authentication apparatus 2 that is a specific example of the "authentication apparatus" described in Supplementary Note later, and a management server 3. The camera 1 and the authentication apparatus 2 may be integrated, or the camera 1 and the authentication apparatus 2 may be separate apparatuses.

The second example embodiment describes an example in which the authentication system SYS is introduced to a hotel (or any accommodation facility that is different from the hotel). In this example, the authentication system SYS performs an authentication operation of authenticating a customer P entering a guest room C at the hotel. The guest room C is a specific example of the "target area" described in Supplementary Note later, and the customer P is a specific example of the "person" described in Supplementary Note later. In addition, when the authentication of the customer P is successful as a part of the authentication operation, the authentication system SYS may perform an unlocking operation of unlocking a door DR of the guest room C. As a result, the customer P can enter the guest room C. In this instance, in the second example embodiment, the customer P can unlock the door DR of the guest room C without using a card key (or any other physical keys) to unlock the door DR of the guest room C. Therefore, convenience of the customer P is improved. The lockable door DR is a specific example of the "restriction unit" described in Supplementary Note later.

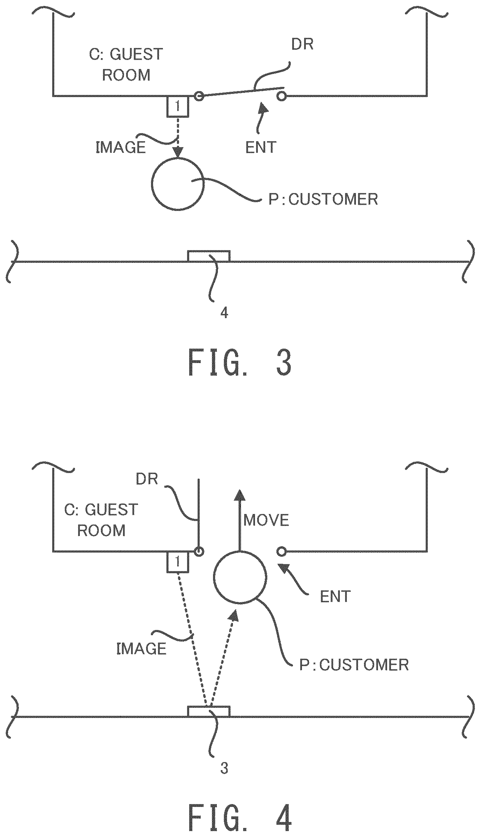

FIG. 3 illustrates an example of the guest room C at the hotel to which the authentication system SYS is introduced. As illustrated in FIG. 3, the camera 1 is disposed outside the guest room C. For example, the camera 1 may be disposed an entrance ENT (or near the entrance ENT) of the guest room C. For example, the camera 1 may be disposed on a wall on a right side or a wall on a left side of the door DR located at the entrance ENT. Furthermore, the camera 1 may be disposed at a position determined based on a circulation path of the customer P intending to enter the guest room C. For example, when the customer P intending to enter the guest room C comes from a passage on the left side of the guest room C in FIG. 3 to the guest room C, the camera 1 may be disposed on the wall on the left side of the door DR. For example, when the customer P intending to enter the guest room C comes from a passage on the right side of the guest room C in FIG. 3 to the guest room C, the camera 1 may be disposed on the wall on the right side of the door DR.

When the authentication operation is performed, the customer P is located in front of the camera 1 before entering the guest room C. The camera 1 images the customer P located in front of the camera 1. The authentication apparatus 2 acquires a captured image IMG1 that is generated by the camera 1 imaging the customer P for the authentication operation. The captured image IMG1 is a specific example embodiment of the "first image" described in Supplementary Note later. The authentication apparatus 2 authenticates the customer P by using the captured image IMG1 acquired from the camera 1.

For example, the authentication apparatus 2 may perform face authentication of authenticating the customer P by using information about a face of the customer P (e.g., feature points of the face) captured in the captured image IMG1. In this case, the camera 1 may image at least the face of the customer P.

In the second example embodiment, the authentication system SYS further performs a counting operation for counting the number of the customers P staying in the guest room C.

Specifically, when the counting operation is performed, the camera 1 not only images the customer P for the authentication operation, but also images the customer P for the counting operation. Specifically, the camera 1 images the customer P passing through the entrance ENT of the guest room C. That is, in addition to imaging the customer P before the customer P enters the guest room, the camera 1 also images the customer P passing through the entrance ENT of the guest room C. Since it is unknown when the customer P passes through the entrance ENT of the guest room C, when the counting operation is performed, the camera 1 may continue to image the entrance ENT of the guest room C at a constant imaging rate, thereby imaging the customer P passing through the entrance ENT of the guest room C.

Here, the camera 1 that images the customer P for the authentication operation, images the customer P intending to unlock the door DR of the guest room C. In this situation, as illustrated in FIG. 3, the camera 1 often images the customer P located in front of or diagonally ahead of the door DR of the guest room C. This is because the camera 1 is often located at the door DR of the guest room C or on the left and right of the door DR. In this situation, depending on a positional relation between the camera 1 and the entrance ENT of the guest room C, it may be hard for the camera 1 to image the customer P passing through the entrance ENT of the guest room C. For example, as illustrated in FIG. 3, the camera 1 that images the customer P located diagonally ahead of the door DR of the guest room C, hardly images the entrance ENT of the guest room C where the door DR is disposed. That is, it is hard for the camera 1 to image the customer P passing through the entrance ENT of the guest room C. Therefore, in the second example embodiment, as illustrated in FIG. 4 that is a plan view illustrating an example of the guest room C of the hotel to which the authentication system SYS is introduced, the camera 1 may image the customer P passing through the entrance ENT of the guest room C, through a mirror 4. That is, the camera 1 may image the customer P passing through the entrance ENT of the guest room C, through the mirror 4 for the counting operation, and may image the customer P intending to unlock the door DR of the guest room C, without through the mirror 4 for the authentication operation.

Alternatively, depending on the positional relation between the camera 1 and the entrance ENT of the guest room C, the camera 1 may image the customer P intending to unlock the door DR of the guest room C through the mirror 4 for the authentication operation. The camera 1 may image the customer P passing through the entrance ENT of the guest room C, without through the mirror 4 for the counting operation.

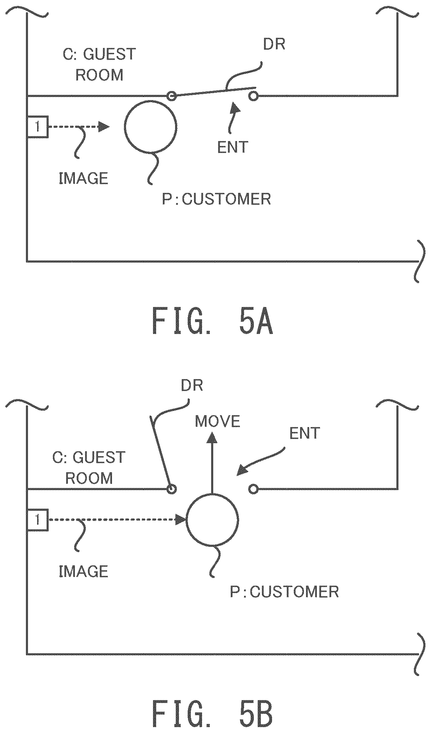

In some cases, however, as illustrated in FIG. 5A and FIG. 5B that are plan views illustrating another example of the guest room C to which the authentication system SYS is introduced, the camera 1 that images the customer P for the authentication operation, may be capable of imaging the customer P passing through the entrance ENT of the guest room C. FIG. 5A illustrates the positional relation between the camera 1 that images the customer P for the authentication operation, and the customer P intending to unlock the door DR of the guest room C. FIG. 5B illustrates the positional relation between the camera 1 that images the customer P for the counting operation, and the customer P passing through the entrance ENT of the guest room C. In this instance, the camera 1 may image the customer P intending to unlock the door DR of the guest room C and the customer P passing through the entrance ENT of the guest room C, without through the mirror 4.

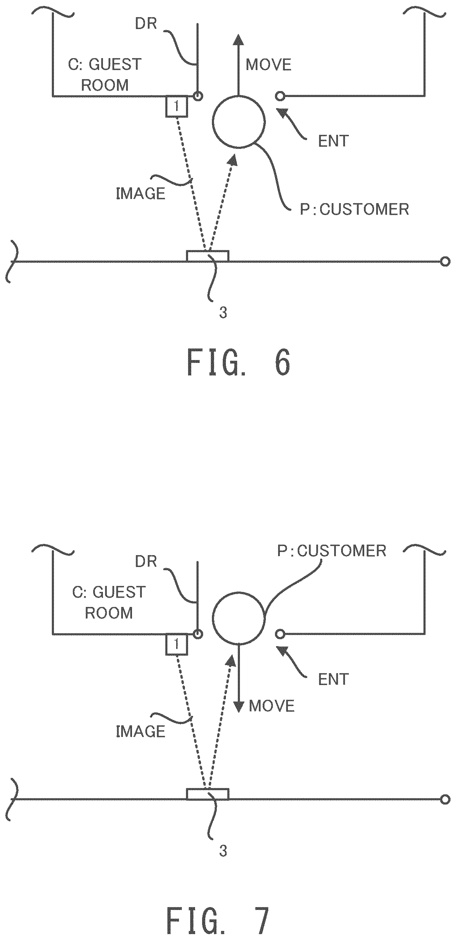

The customer P passes through the entrance ENT to enter the guest room C. Therefore, as illustrated in FIG. 6, the camera 1 may image the customer P passing through the entrance ENT to enter the guest room C (i.e., to enter an inside of the guest room C from an outside of the guest room C). For example, the customer P passes through the entrance ENT to leave the guest room C. Therefore, as illustrated in FIG. 7, the camera 1 may image the customer P passing through the entrance ENT to leave the guest room C (i.e., to leave the inside of the guest room C to the outside of the guest room C).

The camera 1 may image a whole body of the customer P passing through the entrance ENT of the guest room C. Alternatively, the camera 1 may image a part of the customer P passing through the entrance ENT of the guest room C. For example, the camera 1 may image at least a head of the customer P. For example, the camera 1 may image at least an upper body of the customer P.

Thereafter, the authentication apparatus 2 acquires a captured image IMG2 that is generated by the camera 1 imaging the customer P for the counting operation. The captured image IMG2 is a specific example embodiment of the "second image" described in Supplementary Note later. The authentication apparatus 2 counts the number of the customers P staying in the guest room C by using the captured image IMG2 acquired from the camera 1. Specifically, the authentication apparatus 2 performs behavior analysis processing for analyzing an action/behavior of the customer P by using the captured image IMG2, thereby counting the number of the customers P staying in the guest room C. The behavior analysis processing is a specific example of the "counting processing" described in Supplementary Note later.

The timing when the camera 1 images the customer P even for the counting operation, is normally different from the timing when the camera 1 images the customer P for the authentication purposes. This is because the customer P intending to enter the guest room C, passes through the entrance ENT of the guest room C and enters the guest room C after the door DR of the guest room C is unlocked by the authentication operation. In addition, when the customer P leaves the guest room C, the authentication operation is not carried out. Therefore, the captured image IMG2 used for the counting operation is typically an image that is different from the captured image IMG1 used for the authentication operation. The captured image IMG2, however, may be the same image as the captured image IMG1. That is, the captured image IMG1 may be used as the captured image IMG2. In this instance, the authentication apparatus 2 may perform the counting operation by using the captured image IMG1 used for the authentication operation.

The authentication apparatus 2 transmits count information indicating a result of the counting operation (i.e., information indicating the number of the customers P staying in the guest room C) to the management server 3. Therefore, the authentication apparatus 2 and the management server 3 are configured to communicate with each other through a communication network. The communication network may include a wired communication network, or may include a wireless communication network.

The hotel is usually equipped with a plurality of guest rooms C. In this case, the camera 1 may be disposed outside each guest room C. That is, the authentication system SYS may include a plurality of cameras 1 respectively corresponding to the plurality of guest rooms C. When the authentication system SYS includes the plurality of cameras 1, the authentication system SYS may include a plurality of authentication apparatuses 2 respectively corresponding to the plurality of cameras 1. That is, the authentication system SYS may include a plurality of authentication apparatuses 2 respectively corresponding to the plurality of guest rooms C. In this instance, each authentication apparatus 2 may authenticate the customer P entering the guest room C corresponding to each authentication apparatus 2, by using the captured image IMG1 generated by the camera 1 disposed outside the guest room corresponding to each authentication apparatus 2. Each authentication apparatus 2 may count the number of the customers P staying in the guest room C corresponding to each authentication apparatus 2, by using the captured image IMG2 generated by the camera 1 disposed outside the guest room corresponding to each authentication apparatus 2. The authentication apparatus 2, however, may correspond to at least two cameras 1. In this instance, the authentication apparatus 2 may authenticate the customer P entering a first guest room C by using the captured image IMG1 generated by a first camera 1 disposed outside the first guest room C, and may authenticate the customer P entering a second guest room C by using the captured image IMG1 generated by a second camera 1 disposed outside the second guest room C. The authentication apparatus 2 may count the number of the customers P staying in the first guest room C by using the captured image IMG2 generated by the first camera 1 located outside the first guest room C, and may count the number of the customers P staying in the second guest room C by using the captured image IMG2 generated by the second camera 1 located outside the second guest room C.

The management server 3 performs a management operation for managing a situation of utilization of the guest room C, on the basis of the count information. For example, the management server 3 may centrally manage the number of the customers P staying in each of the plurality of guest rooms C provided in the hotel, on the basis of the count information. For example, the management server 3 may centrally manage whether or not the customer P stays in each of the plurality of guest rooms C provided in the hotel, on the basis of the count information. In addition, the management server 3 may centrally manage a situation of a procedure performed by the customer P for each of the plurality of guest rooms C provided in the hotel (e.g., at least one of a check-in procedure and a check-out procedure).

### (2-2) Configuration of Authentication Apparatus 2

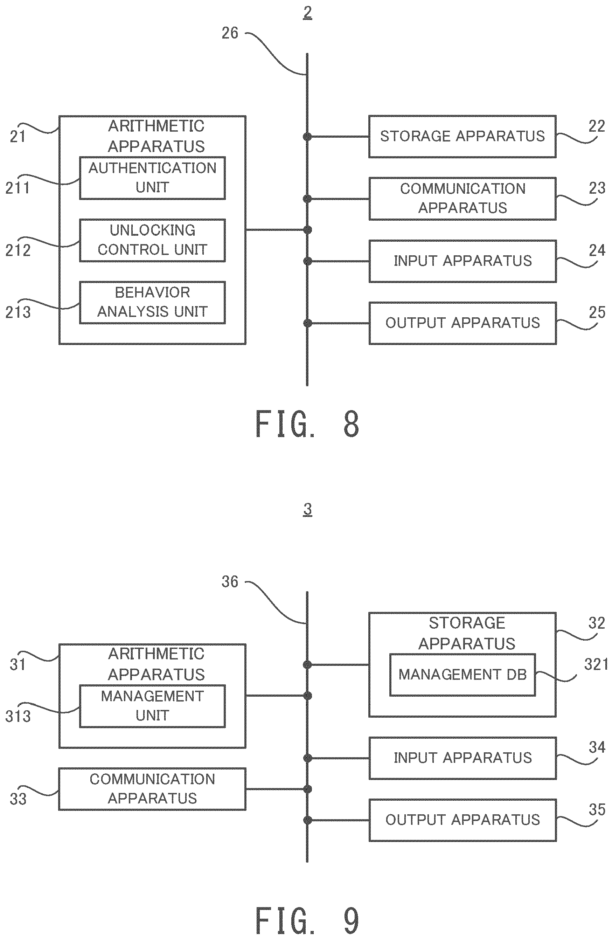

Next, with reference to FIG. 8, a configuration of the authentication apparatus 2 in the second example embodiment will be described. FIG. 8 is a block diagram illustrating the configuration of the authentication apparatus 2 in the second example embodiment.

As illustrated in FIG. 8, the authentication apparatus 2 includes an arithmetic apparatus 21, a storage apparatus 22, and a communication apparatus 23. Furthermore, the authentication apparatus 2 may include an input apparatus 24 and an output apparatus 25. The authentication apparatus 2, however, may not include at least one of the input apparatus 24 and the output apparatus 25. The arithmetic apparatus 21, the storage apparatus 22, the communication apparatus 23, the input apparatus 24, and the output apparatus 25 may be connected through a data bus 26.

The arithmetic apparatus 21 includes at least one of a CPU (Central Processing Unit), a GPU (Graphics Processing Unit), a FPGA (Field Programmable Gate Array), for example. The arithmetic apparatus 21 reads a computer program. For example, the arithmetic apparatus 21 may read a computer program stored in the storage apparatus 22. For example, the arithmetic apparatus 21 may read a computer program stored by a computer-readable and non-transitory recording medium, by using a not-illustrated recording medium reading apparatus provided in the authentication apparatus 2. The arithmetic apparatus 21 may acquire (i.e., download or read) a computer program from a not-illustrated apparatus disposed outside the authentication apparatus 2, through the communication apparatus 23 (or another communication apparatus). The arithmetic apparatus 21 executes the read computer program. Consequently, a logical functional block for performing an operation to be performed by the authentication apparatus 2 (e.g., the authentication operation and the counting operation described above) is realized or implemented in the arithmetic apparatus 21. That is, the arithmetic apparatus 21 is allowed to function as a controller for realizing or implementing the logical functional block for performing an operation (in other words, processing) to be performed by the authentication apparatus 2.

FIG. 8 illustrates an example of the logical functional block realized or implemented in the arithmetic apparatus 21 to perform the authentication operation and the counting operation. As illustrated in FIG. 8, an authentication unit 211 that is a specific example of the "authentication unit" described in Supplementary Note later, an unlocking control unit 212 that is a specific example of the "switching unit" described in Supplementary Note later, and a behavior analysis unit 213 that is a specific example of the "counting unit" described in Supplementary Note later are realized or implemented in the arithmetic apparatus 21. The authentication unit 211 authenticates the customer P entering the guest room C of the hotel on the basis of the captured image IMG1 generated by the camera 1. That is, the authentication unit 211 performs at least a part of the authentication operation. For example, the authentication unit 211 may perform the face authentication as described above. When the face authentication is performed, the authentication unit 211 may acquire the captured image IMG1 from the camera 1. Thereafter, the authentication unit 211 may acquire (in other words, extract) a face image in which the face of the customer P is captured, from the acquired captured image IMG1. Thereafter, the authentication unit 211 may extract feature quantities of the face of the customer P from the face image. Thereafter, the authentication unit 211 may compare the extracted feature quantities of the customer P with feature quantities of a registered person registered in advance thereby determining whether or not the customer P is the same as the registered person. When the customer P is the same as the registered person, the authentication unit 211 may determine that the authentication of the customer P is successful. When the customer P is not the same as the registered person, the authentication unit 211 may determine that the authentication of the customer P is failed. When the authentication of the customer P is successful, the unlocking control unit 212 performs an unlocking operation of unlocking the door DR of the guest room C. That is, the unlocking control unit 212 performs the unlocking operation that is a part of the authentication operation. The behavior analysis unit 213 counts the numbers of the customers P staying in the guest room C by performing the behavior analysis processing on the basis of the captured image IMG2 generated by the camera 1. That is, the behavior analysis unit 213 performs the counting operation.

The storage apparatus 22 is configured to store desired data. For example, the storage apparatus 22 may temporarily store a computer program to be executed by the arithmetic apparatus 21. The storage apparatus 22 may temporarily store data that are temporarily used by the arithmetic apparatus 21 when the arithmetic apparatus 21 executes the computer program. The storage apparatus 22 may store data that are stored by the authentication apparatus 2 for a long time. The storage apparatus 22 may include at least one of a RAM (Random Access Memory), a ROM (Read Only Memory), a hard disk apparatus, a magneto-optical disk apparatus, a SSD (Solid State Drive), and a disk array apparatus. That is, the storage apparatus 22 may include a non-transitory recording medium.

The communication apparatus 23 is configured to communicate with an apparatus external to the authentication apparatus 2. For example, the communication apparatus 23 may be configured to communicate with each of the camera 1 and the management server 3. In this instance, the authentication unit 211 may receive (i.e., acquire) the captured image IMG1 from the camera 1 through the communication apparatus 23. The behavior analysis unit 213 may receive (i.e., acquire) the captured image IMG2 from the camera 1 through the communication apparatus 23. The behavior analysis unit 213 may transmit (i.e., output) the count information to the management server 3 through the communication apparatus 23.

The input apparatus 24 is an apparatus that receives an input of information to the authentication apparatus 2 from the outside of the authentication apparatus 2. For example, the input apparatus 24 may include an operating apparatus (e.g., at least one of a keyboard, a mouse, and a touch panel) that is operable by an operator of the authentication apparatus 2. For example, the input apparatus 24 may include a reading apparatus that is configured to read information recorded as data on a recording medium that is externally attachable to the authentication apparatus 2.

The output apparatus 25 is an apparatus that outputs information to the outside of the authentication apparatus 2. For example, the output apparatus 25 may output information as an image. That is, the output apparatus 25 may include a display apparatus (a so-called display) that is configured to display an image indicating the information that is desirably outputted. For example, the output apparatus 25 may output information as audio/sound. That is, the output apparatus 25 may include an audio apparatus (a so-called speaker) that is configured to output the audio/sound. For example, the output apparatus 25 may output information onto a paper surface. That is, the output apparatus 25 may include a print apparatus (a so-called printer) that is configured to print desired information on the paper surface.

When the authentication apparatus 2 includes the output apparatus 25, authentication apparatus 2 (especially, the output apparatus 25) may be disposed outside the guest room C, similarly to the camera 1. For example, the authentication apparatus 2 (especially, the output apparatus 25) may be disposed at or near the entrance ENT of the guest room C. In this instance, the authentication apparatus 2 may output information about a result of the authentication operation, to the customer P, by using the output apparatus 25. In this instance, the authentication apparatus 2 may display the information about the result of the authentication operation, to the customer P, by using a display apparatus that is a specific example of the output apparatus 25.

### (2-3) Configuration of Management Server 3

Next, with reference to FIG. 9, a configuration of the management server 3 in the second example embodiment will be described. FIG. 9 is a block diagram illustrating the configuration of the management server 3 in the second example embodiment.

As illustrated in FIG. 9, the management server 3 includes an arithmetic apparatus 31, a storage apparatus 32, and a communication apparatus 33. The management server 3 may further include an input apparatus 34 and an output apparatus 35. The management server 3, however, may not include at least one of the input apparatus 34 and the output apparatus 35. The arithmetic apparatus 31, the storage apparatus 32, the communication apparatus 33, the input apparatus 34, and the output apparatus 35 may be connected through a data bus 36.

The arithmetic apparatus 31 includes at least one of a CPU, a GPU, a FPGA, for example. The arithmetic apparatus 31 reads a computer program. For example, the arithmetic apparatus 31 may read a computer program stored in the storage apparatus 32. For example, the arithmetic apparatus 31 may read a computer program stored by a computer-readable and non-transitory recording medium, by using a not-illustrated recording medium reading apparatus provided in the management server 3. The arithmetic apparatus 31 may acquire (i.e., download or read) a computer program from a not-illustrated apparatus disposed outside the management server 3, through the communication apparatus 33 (or another communication apparatus). The arithmetic apparatus 31 executes the read computer program. Consequently, a logical functional block for performing an operation to be performed by the management servers 3 (e.g., the management operation described above) is realized or implemented in the arithmetic apparatus 31. That is, the arithmetic apparatus 31 is allowed to function as a controller for realizing or implementing the logical functional block for performing an operation (in other words, processing) to be performed by the management server 3.

FIG. 9 illustrates an example of the logical functional block realized or implemented in the arithmetic apparatus 31 to perform the counting operation. As illustrated in FIG. 9, a management unit 311 is realized or implemented in the arithmetic apparatus 31. The management unit 311 manages the situation of utilization of the guest room C on the basis of the count information. That is, the management unit 311 performs the management operation.

The storage apparatus 32 is configured to store desired data. For example, the storage apparatus 32 may temporarily store a computer program to be executed by the arithmetic apparatus 31. The storage apparatus 32 may temporarily store data that are temporarily used by the arithmetic apparatus 31 when the arithmetic apparatus 31 executes the computer program. The storage apparatus 32 may store data that are stored by the management server 3 for a long time. The storage apparatus 32 may include at least one of a RAM, a ROM, a hard disk apparatus, a magneto-optical disk apparatus, a SSD, and a disk array apparatus. That is, the storage apparatus 32 may include a non-transitory recording medium.

In the second example embodiment, the storage apparatus 32 is configured to store a management DB (Database) 321 for managing the situation of utilization of the guest room C. The management DB 321 is generated or updated by the management unit 311.

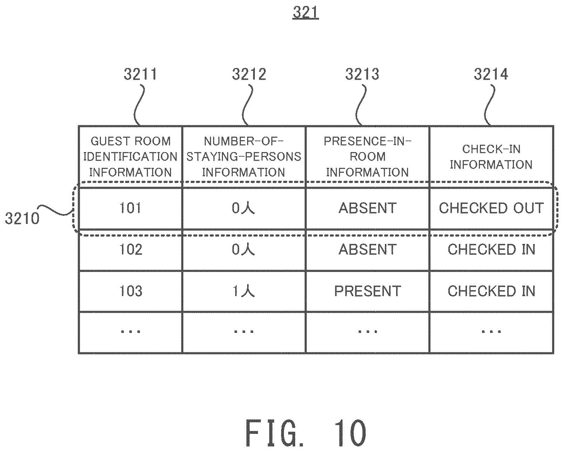

FIG. 10 illustrates an example of a data structure of the management DB 321. As illustrated in FIG. 10, the management DB 321 includes a plurality of guest room records 3210. The plurality of guest room records 3210 are records (i.e., data) for managing the situation of utilization of the plurality of guest rooms C provided in the hotel, respectively. Each guest room record 3210 may include guest room identification information 3211, number-of-staying-persons information 3212, presence-in-room information 3213, and check-in information 3214. The guest room identification information 3211 is information specific to the guest room C for identifying the guest room C (e.g., ID information). The number-of-staying-persons information 3212 is information indicating the number of the customers P staying in the guest room C. The management unit 311 may update the number-of-staying-persons information 3212 on the basis of the count information transmitted from the authentication apparatus 2. The presence-in-room information 3213 is information indicating whether or not the customer P is staying in the guest room C. The management unit 311 may update the presence-in-room information 3213, on the basis of the count information transmitted from the authentication apparatus 2 (or the number-of-staying-persons information 3212 generated or updated by the management unit 311). For example, when the customer P is staying in the guest room C (i.e., the number of the customers P staying in the guest room C is greater than or equal to 1), the management unit 311 may set a status of the presence-in-room information 3213, to a "present" status. For example, when the customer P is not staying in the guest room C (i.e., the number of the customers P staying in the guest room C is 0), the management unit 311 may set the status of the presence-in-room information 3213, to an "absent" status. The check-in information 3214 is information indicating whether or not the check-in procedure for the guest room C is completed, and/or, whether or not the check-out procedure for the guest room C is completed. For example, when the check-in procedure for the guest room C is completed, the management unit 311 may set a status of the check-in information 3214 to a "checked in" status. For example, when the check-out procedure for the guest room C is completed, the management unit 311 may set the status of the check-in information 3214 to a "checked out" status. When the status of the check-in information 3214 is set to the "checked out" status, the customer P is not in the guest room C. Therefore, when setting the status of the check-in information 3214 to the "checked out" status, the management unit 311 may automatically set the status of the presence-in-room information 3213 to the "absent" status. The guest room record 3210, however, may not include at least one of the guest room ID 3211, the number-of-staying-persons information 3212, the presence-in-room information 3213, and the check-in information 3214.

The communication apparatus 33 is configured to communicate with an apparatus external to the management server 3. For example, the communication apparatus 33 may be configured to communicate with the management server 3. In this case, the management unit 311 may receive (i.e., acquire) the count information from the authentication apparatus 2 through the communication apparatus 33.

The input apparatus 34 is an apparatus that receives an input of information to the management server 3 from the outside of the management server 3. For example, the input apparatus 34 may include an operating apparatus (e.g., at least one of a keyboard, a mouse, and a touch panel) that is operable by an operator of the management server 3. For example, the input apparatus 24 may include a reading apparatus that is configured to read information recorded as data on a recording medium that is externally attachable to the management server 3.

The output apparatus 35 is an apparatus that outputs information to the outside of the management server 3. For example, the output apparatus 35 may output information as an image. That is, the output apparatus 35 may include a display apparatus (a so-called display) that is configured to display an image indicating the information that is desirably outputted. For example, the output apparatus 35 may output information as audio/sound. That is, the output apparatus 35 may include an audio apparatus (a so-called speaker) that is configured to output the audio/sound. For example, the output apparatus 35 may output information onto a paper surface. That is, the output apparatus 35 may include a print apparatus (a so-called printer) that is configured to print desired information on the paper surface.

### (2-4) Counting Operation Performed by Authentication Apparatus 2

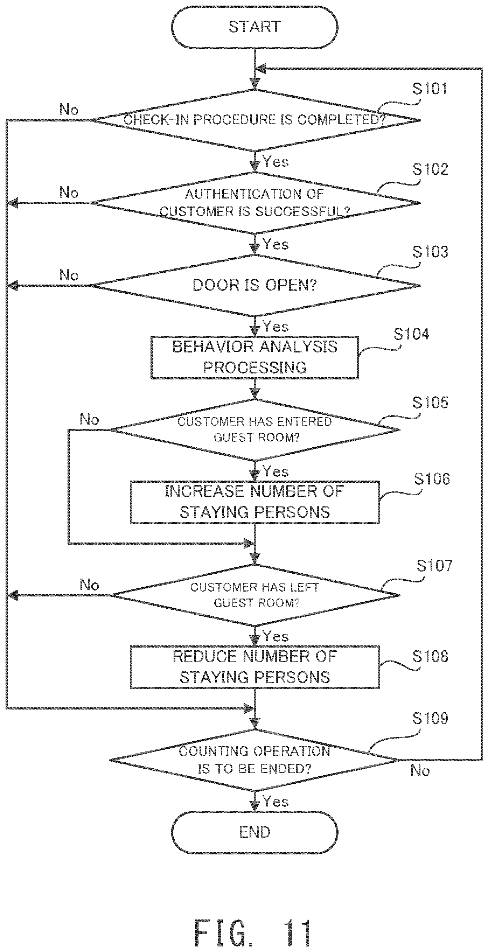

Next, with reference to FIG. 11, the counting operation performed by the authentication apparatus 2 will be described. FIG. 11 is a flowchart illustrating a flow of the counting operation performed by the authentication apparatus 2.

As illustrated in FIG. 11, the behavior analysis unit 213 determines whether or not the check-in procedure for the guest room C that is a target of the counting operation, is completed (step S101). For example, as described above, the check-in information 3214 in the management DB 321 managed by the management server 3 indicates whether or not the check-in procedure for the guest room C is completed. Therefore, the behavior analysis unit 213 may determine whether or not the check-in procedure is completed, by acquiring the check-in information 3214 indicating whether or not the check-in procedure for the guest room C is completed, from the management server 3, by using the communication apparatus 23.

As a result of the determination in the step S101, when it is determined that the check-in procedure is not completed (the step S101: No), it is unlikely that customer P enters the guest room C, and that the customer P leaves the guest room C. Therefore, there is little need to perform the behavior analysis processing so as to count the number of the customers P staying in the guest room C. Therefore, in this case, the behavior analysis unit 213 may not start the behavior analysis processing. That is, the behavior analysis unit 213 may not acquire the captured image IMG2 from the camera 1 and may not perform the behavior analysis processing. Furthermore, the camera 1 may also not start the imaging of the customer P (specifically, the imaging of the entrance ENT of the guest room C) for the counting operation. That is, the camera 1 may also not image the customer P (specifically, the entrance ENT of the guest room C) for the counting operation.

In this case, the behavior analysis unit 213 may determine whether or not to end the counting operation (step S109). For example, the behavior analysis unit 213 may determine to end the counting operation when an operator of the authentication system SYS (e.g., the operator of the authentication apparatus 2 or the management server 3) gives an instruction to end the counting operation. For example, the behavior analysis unit 213 may determine to end the counting operation when an employee of the accommodation facility gives an instruction to end the counting operation.

As a result of the determination in the step S109, when it is determined that the counting operation is to be end (step S109: Yes), the authentication apparatus 2 ends the counting operation illustrated in FIG. 2. On the other hand, as a result of the determination in the step S109, when it is determined that the counting operation is not to be ended (the step S109: No), the authentication apparatus 2 performs the step S101 again.

On the other hand, as a result of the determination in the step S101, when it is determined that the check-in procedure for the guest room C is completed (the step S101: Yes), the behavior analysis unit 213 determines whether or not the authentication of the customer P using the guest room C that is a target of the counting operation, is successful (step S102). For example, the behavior analysis unit 213 may determine whether or not the authentication of the customer P is successful, by acquiring information indicating whether or not the authentication of the customer P using the guest room C that is a target of the counting operation, is successful, from the authentication unit 211 that performs the authentication operation.

The authentication system SYS (e.g., the management server 3) may control the camera 1 such that, upon completion of the check-in procedure, the camera 1 corresponding to the guest room C in which the check-in procedure is completed, starts the operation. Conversely, the authentication system SYS (e.g., the management server 3) may control the camera 1 such that, upon completion of the check-out procedure, the camera 1 corresponding to the guest room C in which the check-out procedure is completed, ends the operation.

As a result of the determination in the step S102, when it is determined that the authentication of customer P is never successful (the step S102: No), it is unlikely that the customer P is staying in the guest room C because the door DR of the guest room C is never unlocked. Therefore, it is unlikely that the customer P leaves the guest room C. Furthermore, since the authentication of the customer P needs to be successful in order for the customer P to enter the guest room C, it is unlikely that the customer P enters the guest room C when the authentication of the customer P is never successful. Therefore, there is little need to perform the behavior analysis processing so as to count the number of the customers P staying in the guest room C. Therefore, in this case, as in a case where it is determined that the check-in procedure is not completed in the step S101, the behavior analysis unit 213 may not start the behavior analysis processing. Furthermore, the camera 1 may also not start the imaging of the customer P (specifically, the imaging of the entrance ENT of the guest room C) for the counting operation. In this case, the behavior analysis unit 213 may determine whether or not to end the counting operation (step S109).

On the other hand, as a result of the determination in the step S102, when it is determined, even once, that the authentication of the customer P is successful (the step S102: Yes), the behavior analysis unit 213 determines whether or not the door DR of the guest room C that is a target of the counting operation, is open (step S103). For example, the behavior analysis unit 213 may determine whether or not the door DR is open, by acquiring information indicating whether or not the door DR of the guest room C is open, from a sensor that is set at the door DR of the guest room C and that is configured to detect whether or not the door DR of the guest room C is open.

As a result of the determination in the step S103, when it is determined that the door DR of the guest room C is not open (i.e., closed) (the step S103: No), there is no possibility that the customer P enters the guest room C or that the customer P leaves the guest room C. This is because when the door DR is not open, the customer P cannot enter the guest room C or leave the guest room C. Therefore, there is little need to perform the behavior analysis processing so as to count the number of the customers P staying in the guest room C. Therefore, in this case, as in a case where it is determined that the check-in procedure is not completed in the step S101, the behavior analysis unit 213 may not start the behavior analysis processing. Furthermore, the camera 1 may also not start the imaging of the customer P (specifically, the imaging of the entrance ENT of the guest room C) for the counting operation. In this case, the behavior analysis unit 213 may determine whether or not to end the counting operation (step S109).

On the other hand, as a result of the determination in the step S103, when it is determined that the door DR of the guest room C is open (the step S103: Yes), it is likely that the customer P enters the guest room C or that the customer P leaves the guest room C because the check-in procedure is completed, the authentication is successful, and the door DR is open. Therefore, the behavior analyses processing needs to be performed to count the number of the customers P staying in the guest room C. Therefore, in this instance, the behavior analysis unit 213 starts the behavior analysis processing (step S104). Furthermore, the camera 1 also starts the imaging of the customer P (specifically, the imaging of the entrance ENT of the guest room C) for the counting operation.

The behavior analysis unit 213 performs the behavior analysis processing in the step S104, thereby determining whether or not the customer P has entered the guest room C as illustrated in FIG. 6 (step S105). For example, the camera 1 continues to image the entrance ENT of the guest room C at a constant imaging rate. Therefore, the camera 1 generates a plurality of captured images IMG2 corresponding to time series data. The behavior analysis unit 213 performs the behavior analysis processing using the plurality of captured images IMG2, thereby detecting, in the captured images IMG2, the customer P moving from an outer image area corresponding to the outside of the guest room C to an inner image area corresponding to the inside of the guest room C, through a border image area corresponding to the entrance ENT. Each of the border image area, the inner image area, and the outer image area may be designated in advance from the positional relation between the camera 1 and the entrance ENT of the guest room C and from camera parameters of the camera 1 (e.g., information about optical properties of an optical system such as a lens). When such a customer P is detected, the behavior analysis unit 213 may determine that the customer P has entered the guest room C. On the other hand, when such a customer P is not detected, the behavior analysis unit 213 may determine that the customer P has not entered the guest room C.

As a result of the determination in the step S105, when it is determined that the customer P has entered the guest room C (the step S105: Yes), the behavior analysis unit 213 increases the number of the customers P staying in the guest room C (step S106). As an example, when it is determined that one customer P has entered the guest room C, the behavior analysis unit 213 may increase the number of the customers P staying in the guest room C, by one. As another example, when it is determined that N customers P have entered the guest room C (where N is a variable indicating an integer of 1 or more), the behavior analysis unit 213 may increase the number of the customers P staying in the guest room C, by N.

On the other hand, as a result of the determination in the step S105, when it is determined that the customer P has not entered the guest room C (the step S105: No), the behavior analysis unit 213 may not increase the number of the customers P staying in the guest room C.

Furthermore, the behavior analysis unit 213 performs the behavior analysis processing in the step S104, thereby determining whether or not the customer P has left the guest room C as illustrated in FIG. 7 (step S107). For example, the behavior analysis unit 213 performs the behavior analysis processing using the plurality of captured images IMG2 corresponding to the time series data, thereby detecting, in the captured images IMG2, the customer P moving from the inner image area corresponding to the inside of the guest room C to the outer image area corresponding to the outside of the guest room C, through the border image area corresponding to the entrance ENT. When such a customer P is detected, the behavior analysis unit 213 may determine that the customer P has left the guest room C. On the other hand, when such a customer P is not detected, the behavior analysis unit 213 may determine that the customer P has not left the guest room C.

As a result of the determination in the step S107, when it is determined that the customer P has left the guest room C (the step S107: Yes), the behavior analysis unit 213 reduces the number of the customers P staying in the guest room C (step S108). As an example, when it is determined that one customer P has left the guest room C, the behavior analysis unit 213 may reduce the number of the customers P staying in the guest room C, by one. As another example, when it is determined that M customers P have left the guest room C (where M is a variable indicating an integer of 1 or more), the behavior analysis unit 213 may reduce the number of the customers P staying in the guest room C, by M.

On the other hand, as a result of the determination in the step S107, when it is determined that the customer P has not left the guest room C (the step S107: No), the behavior analysis unit 213 may not reduce the number of the customers P staying in the guest room C.

When the behavior analysis unit 213 changes the number of the customers P staying in the guest room C, the behavior analysis unit 213 may transmit the count information indicating the number of the customers P after the change, to the management server 3. The management unit 311 of the management server 3 may update the management DB 321 on the basis of the count information indicating the number of the customers P after the change.

Thereafter, the behavior analysis unit 213 may determine whether or not to end the counting operation (step S109). As a result of the determination in the step S109, when it is determined that the counting operation is to be ended (the step S109: Yes), the authentication apparatus 2 ends the counting operation illustrated in FIG. 2. On the other hand, as a result of the determination in the step S109, when it is determined that the counting operation is not to be ended (the step S109: No), the authentication apparatus 2 performs the step S101 again.

### (2-5) Technical Effect of Authentication Apparatus 2 (Authentication System SYS)

As described above, in the second example embodiment, the authentication apparatus 2 is capable of performing the counting operation by using the camera 1 used to authenticate the customer P. Therefore, the authentication apparatus 2 may not include a special apparatus is different from the camera 1 in order to perform the counting operation. Therefore, the authentication apparatus 2 is capable of reducing the cost of the authentication apparatus 2. That is, the authentication apparatus 2 is capable of solving the technical problem that the cost of the authentication apparatus 2 is increased when the counting operation is performed by using a special apparatus for performing the counting operation.

As an example, the authentication apparatus 2 may not include a sensor that detects the customer P in the guest room P, as the special apparatus for performing the counting operation. For example, the authentication apparatus 2 may not include a sensor (e.g., a human/motion sensor) that is configured to detect the customer P in the guest room P, as the special apparatus for performing the counting operation. For example, the authentication apparatus 2 may not include a camera that images the customer P in the guest room P, as the special apparatus for performing the counting operation. In this situation, the authentication apparatus 2 is capable of counting the number of the customers P staying in the guest room C, while ensuring privacy of the customers P in the guest room C.

In addition, the authentication apparatus 2 is capable of unlocking the door DR of the guest room C when the authentication is successful by the authentication operation using the captured image IMG1 generated by imaging the customer P. Therefore, the customer P may not use a card key (or a physical key that is different from the card key, and the same shall apply hereinafter) to enter the guest room C. Therefore, the authentication apparatus 2 is capable of enjoying the effect/advantage that it is possible to reduce a time and effort of the customer P to enter the guest room C.

In addition, when the customer P uses the card key to enter the guest room C, it is possible to determine whether or not the customer P is staying in the guest room C (i.e., it is possible to count the number of the customers P staying in the guest room C), by determining whether or not the card key is inserted in a card holder disposed inside the guest room C. In the second example embodiment, however, since the customer P may not use the card key, the authentication apparatus 2 is not capable of counting the number of the customers P staying in the guest room C by determining whether or not the card key is inserted in the card holder. The authentication apparatus 2, however, is capable of counting the number of the customers P staying in the guest room C, by using the camera 1 used to authenticate the customer P, as described above. That is, even when the customer P does not use the card key, the authentication apparatus 2 is capable of counting the number of the customers P staying in the guest room C.

The authentication apparatus 2 also starts the behavior analysis processing when the check-in procedure is completed. On the other hand, the authentication apparatus 2 may not start the behavior analysis processing when the check-in procedure is not completed. Therefore, the authentication apparatus 2 may perform the behavior analysis processing in a situation where it is highly necessary to perform the behavior analysis processing to count the number of the customers P staying in the guest room C, but may not perform the behavior analysis processing in a situation where it is less necessary to perform the behavior analysis processing to count the number of the customers P staying in the guest room C. Therefore, it is possible to reduce a processing load of the authentication apparatus 2, as compared with a case where the behavior analysis processing is constantly performed, regardless of whether or not the check-in procedure is completed. In addition, it is possible to save power of the authentication apparatus 2 because power requirements for the behavior analysis processing are reduced.

The authentication apparatus 2 also starts the behavior analysis processing when the authentication of the customer P is successful. On the other hand, the authentication apparatus 2 may not start the behavior analysis processing when the authentication of the customer P is not successful. Therefore, the authentication apparatus 2 may perform the behavior analysis processing in a situation where it is highly necessary to perform the behavior analysis processing to count the number of the customers P staying in the guest room C, but may not perform the behavior analysis processing in a situation where it is less necessary to perform the behavior analysis processing to count the number of the customers P staying in the guest room C. Therefore, it is possible to reduce a processing load of the authentication apparatus 2, as compared with a case where the behavior analysis processing is constantly performed, regardless of whether or not the authentication of the customer P is successful. In addition, it is possible to save power of the authentication apparatus 2 because power requirements for the behavior analysis processing are reduced.

The authentication apparatus 2 also starts the behavior analysis processing when the door DR of the guest room C is open. On the other hand, the authentication apparatus 2 may not start the behavior analysis processing when the door DR of the guest room C is not open. Therefore, the authentication apparatus 2 may perform the behavior analysis processing in a situation where it is highly necessary to perform the behavior analysis processing to count the number of the customers P staying in the guest room C, but may not perform the behavior analysis processing in a situation where it is less necessary to perform the behavior analysis processing to count the number of the customers P staying in the guest room C. Therefore, it is possible to reduce a processing load of the authentication apparatus 2, as compared with a case where the behavior analysis processing is constantly performed, regardless of whether or not the door DR of the guest room C is open. In addition, it is possible to save power of the authentication apparatus 2 because power requirements for the behavior analysis processing are reduced.

Furthermore, in the second example embodiment, the authentication system SYS is introduced to the hotel. Here, in the hotel, a cleaning staff often cleans the guest room C in a period when the customer P is not staying in the guest room C. Therefore, in order to efficiently clean the guest room C, information about the number of the customers P staying in the guest room C (i.e., information indicating whether or not the customer P is staying in the guest room C) is very useful information. This is because under a situation where the customer P is staying in the hotel (i.e., the check-out procedure is not performed), the cleaning staff can clean the guest rooms specifically in a time period when the customer P is not staying in the guest room C. Therefore, the authentication system SYS is capable of improving efficiency of hotel operations.

Furthermore, in the second example embodiment, the camera 1 may image the entrance ENT of the guest room C through the mirror 4. Therefore, even when the camera 1 is used for both the authentication operation and the counting operation, the camera 1 is capable of imaging the customer P for the authentication operation and is capable of imaging the entrance ENT of the guest room C (especially, the customer P passing through the entrance ENT) for the counting operation.

### (2-6) Modified Examples

In the above description, in the step S101 in FIG. 11, the behavior analysis unit 213 determines whether or not the check-in procedure for the guest room C is completed. The behavior analysis unit 213, however, may not determine whether or not the check-in procedure for the guest room C is completed. In this instance, regardless of whether or not the check-in procedure for the guest room C is completed, the camera 1 may image the customer P (specifically, the entrance ENT of the guest room C) for the counting operation, or the behavior analysis unit 213 may perform the behavior analysis processing.

In the above description, in the step S101 in FIG. 11, the behavior analysis unit 213 determines whether or not the authentication of the customer P using the guest room C is successful. The behavior analysis unit 213, however, may not determine whether or not the authentication of the customer P using the guest room C is successful. In this instance, regardless of whether or not the authentication of the customer P using the guest room C is successful, the camera 1 may image the customer P (specifically, the entrance ENT of the guest room C) for the counting operation, or the behavior analysis unit 213 may perform the behavior analysis processing.

In the above description, in the step S101 in FIG. 11, the behavior analysis unit 213 determines whether or not the door DR of the guest room C is open. The behavior analysis unit 213, however, may not determine whether or not the door DR of the guest room C is open. In this instance, regardless of whether or not the door DR of the guest room C is open, the camera 1 may image the customer P (specifically, the entrance ENT of the guest room C) for the counting operation, or the behavior analysis unit 213 may perform the behavior analysis processing.

The authentication system SYS may include a human/motion sensor (i.e., a proximity sensor) that is configured to detect the customer P located near the camera 1. In this case, when the human/motion sensor does not detect the customer P located near the camera 1, there is no customer P around the camera 1, and thus, there is little need for the camera 1 to image the customer P for the authentication operation (and furthermore, for the counting operation). Therefore, in this case, the camera 1 may not image the customer P for the authentication operation, and may not image the entrance ENT of the guest room C for the counting operation. On the other hand, when the human/motion sensor detects the customer P located near the camera 1, the camera 1 may image the customer P for the authentication operation, and may image the entrance ENT of the guest room C for the counting operation. Consequently, it is less likely that the camera 1 malfunctions due to aging, as compared with a case where the camera 1 continues to image the imaging range all the time. In addition, it is possible to save power of the authentication system SYS because power requirements for the operation of the camera 1 are reduced.

The camera 1 may not image the entrance ENT of the guest room C for the counting operation, when the status of the presence-in-room information 3213 of the management DB 321 managed by the management server 3 is in the "absent" status. This is because, when the status of the presence-in-room information 3213 is in the "absent" status, there is no possibility that the customer P leaves the guest room from the guest room C because the customer P is not staying in the guest room C. On the other hand, when the status of the presence-in-room information 3213 is the "present" status, the entrance ENT of the guest room C may be imaged for the counting operation. As a consequence, it is possible to save power of the authentication power SYS, because power requirements for the operation of the camera 1 are reduced.

The mirror 4 disposed to image the entrance ENT of the guest room C, may be disposed at a position that is hard for the customer P to see. For example, the mirror 4 may be disposed on the ceiling of a hotel corridor. In this case, a curved mirror may be used as the mirror 4, as needed. Regardless of a placement position of the mirror 4, however, a curved mirror may be used as the mirror 4, or a planar mirror may be used as the mirror 4. In short, as long as it is possible to image the entrance ENT of the guest room C through the mirror 4, a shape, a type, and a placement position of the mirror 4 is not limited to the example described in the present example embodiment.

In addition to authenticating the customer P, the authentication apparatus 2 (especially, the authentication unit 211) may determine whether or not the customer P is a living body. For example, after the successful authentication of the customer P, an infrared camera disposed at the entrance ENT of the guest room C is activated together with the camera 1, and the infrared camera may image the customer P. The authentication unit 211 may determine whether or not the customer P is a living body, on the basis of an infrared image generated by the infrared camera imaging the customer (i.e., an image indicating a temperature distribution of the customer P).

The management unit 311 of the management server 3 may determine whether or not there is an abnormality in the guest room C , on the basis of the management DB 321, as a part of the management operation.

For example, the management unit 311 may determine that there is an abnormality in the guest room C, when the number-of-staying-persons information 3212 included in the management DB 321, indicates that a number of customers P exceeding an allowable number of people are staying in the guest room C. In this instance, information indicating the allowable number of people corresponding to an upper limit of the number of the customers P who can stay in the guest room C, may be registered in advance in the management DB 321.

For example, the management unit 311 may determine that there is an abnormality in the guest room C, when the number-of-staying-persons information 3212 included in the management DB 321, indicates that a number of customers P exceeding a number of people scheduled to stay are staying in the guest room C. In this instance, information about the number of people scheduled to stay corresponding to the number of the customers P scheduled to stay in the guest room C, may be registered in advance in the management DB 321.

For example, the management unit 311 may determine that there is an abnormality in the guest room C, when the number-of-staying-persons information 3212 included in the management DB 321, indicates that the number of the customers P staying in the guest room C is not zero in a time period when the number of the customers P staying in the guest room C is zero. An example of the time period when the number of the customers P staying in the guest room C is zero, may be a time period after a check-out time. In this instance, the time period when the number of the customers P staying in the guest room C is zero, may be registered in advance in the management DB 321.

The management unit 311 may perform an alert operation for warning an employee of the accommodation facility (or a person using the authentication system SYS) of an abnormality in the guest room C, when it is determined that there is an abnormality in the guest room C. In this instance, the management unit 311 may notify the employee of the accommodation facility (or the person using the authentication system SYS) of at least one of information about the abnormal guest room C and information about the customer P using the abnormal guest room C.

In the above description, the authentication systems SYS is introduced to a hotel (or any accommodation facility that is different from the hotel). The authentication system SYS, however, may be introduced to a facility that is different from the accommodation facility.

As an example, the authentication systems SYS may be introduced to a facility with a private room available to a user (i.e., a person). The private room is a specific example of the "target area" described in Supplementary Note later. An example of the facility with the private room available to a user, may be at least one of a Karaoke store and an Internet cafe. In this case, the authentication system SYS may perform the authentication operation of authenticating the user, by using the captured image IMG1 that is generated by the camera 1 imaging the user before the user enters the private room. The authentication system SYS may perform the unlocking operation of unlocking the door of the private room, when the authentication of the user is successful. The authentication system SYS may perform the counting operation for counting the number of the users staying in the private room, by using the captured image IMG2 that is generated by the camera 1 imaging the users entering and leaving the private room.

As another example, the authentication systems SYS may be introduced to a facility with a stay area where the user can stay. The stay area is a specific example of the "target area" described in Supplementary Note later. An example of the facility with the stay area where user can stay, may be an airport. In this case, the stay area where the user can stay, may include each area in the airport (e.g., at least one of a departure lobby, an arrival lobby, an immigration inspection area (when entering a country), an immigration inspection area (when leaving the country), and a restaurant area). An example of the facility with the stay area where user can stay, may be a theme park. In this case, the stay area where the user can stay, may include an area in the theme park. In this case, the authentication system SYS may perform the authentication operation of authenticating the user, by using the captured image IMG1 that is generated by the camera 1 imaging the user before the user enters the target area. The authentication system SYS may switch a state of a restriction unit that is configured to restrict an entry of the user to the target area, to an unrestricted state in which the entry of the user to the target area is not restricted, when the authentication of the user is successful. An example of the restriction unit may be at least one of a door and a gate. The authentication system SYS may perform the counting operation for counting the number of the users staying in the target area, by using the captured image IMG2 that is generated by the camera 1 imaging the users entering and leaving the target area.

In addition, when the authentication system SYS is introduced to the hotel, the management unit 311 may determine that there is an abnormality in the guest room C, when the number-of-staying-persons information 3212 included in the management DB 321, indicates that the number of the customers P staying in the guest room C is not zero in the time period when the number of the customers P staying in the guest room C is zero, as described above. Even when the authentication system SYS is introduced to the facility with the stay area where user can stay, however, the authentication system SYS may determine that there is an abnormality in the guest room C, when the number-of-staying-persons information 3212 included in the management DB 321, indicates that the number of the customers P staying in the guest room C is not zero in the time period when the number of the customers P staying in the guest room C is zero. For example, when the stay area is a theme park, an example of the time period when the number of the customers P staying in the stay area is zero, may be a time period after a closing time of the theme park. Even in this case, when determining that there is an abnormality in the stay area, the management unit 311 may perform the alert operation for warning an employee of the stay area (or a person using the authentication system SYS) of an abnormality in the stay area. In this case, the management unit 311 may notify the employees of the stay area of information about the number of the customers P staying in the stay area.

### (3) Supplementary Notes

With respect to the example embodiments described above, the following Supplementary Notes are further disclosed.

### [Supplementary Note 1]

An authentication apparatus including:
an authentication unit that authenticates a person, by using a first image that is generated by an imaging apparatus imaging the person before the person enters a target area; and
a counting unit that performs counting processing for counting a number of persons staying in the target area, by using a second image that is generated by the imaging apparatus imaging the persons entering and leaving the target area.

### [Supplementary Note 2]

The authentication apparatus according to Supplementary Note 1, wherein the counting unit starts the counting processing when authentication of the person by the authentication unit is successful, and does not start the counting processing when the authentication of the person by the authentication unit is not successful.

### [Supplementary Note 3]

The authentication apparatus according to Supplementary Note 1 or 2, wherein
a restriction unit that is configured to restrict an entry of the person to the target area, is disposed between the target area and an outside area of the target area, and
the counting unit starts the counting processing when a state of the restriction unit is an unrestricted state in which the entry of the person to the target area is not restricted, and does not start the counting processing when the state of the restriction unit is a restricted state in which the entry of the person to the target area is restricted.

### [Supplementary Note 4]

The authentication apparatus according to Supplementary Note 3, wherein
the target area includes a guest room of an accommodation facility, and
the restriction unit includes a lockable door of the guestroom.

### [Supplementary Note 5]

The authentication apparatus according to Supplementary Note 3 or 4, wherein the authentication apparatus further includes a switching unit that switches the state of the restriction unit to the restricted state, when authentication of the person by the authentication unit is successful.

### [Supplementary Note 6]

The authentication apparatus according to any one of Supplementary Notes 1 to 5, wherein
the person performs a first procedure for entering the target area before entering the target area,
the person performs a second procedure for ending a use of the target area when ending the use of the target area, and
the counting unit starts the counting processing when the person completes the first procedure, and ends the counting processing when the person completes the second procedure.

### [Supplementary Note 7]

The authentication apparatus according to Supplementary Note 6, wherein
the target area includes a guest room of an accommodation facility,
the first procedure includes a check-in procedure to the accommodation facility, and
the second procedure includes a check-out procedure from the accommodation facility.

### [Supplementary Note 8]

The authentication apparatus according to any one of Supplementary Notes 1 to 6, wherein
the imaging apparatus generates the second image by imaging the person through a mirror, and
the imaging apparatus generates the first image by imaging the person without through the mirror.

### [Supplementary Note 9]

An authentication method including:
authenticating a person, by using a first image that is generated by an imaging apparatus imaging the person before the person enters a target area; and
counting a number of persons staying in the target area, by using a second image that is generated by the imaging apparatus imaging the persons entering and leaving the target area.

### [Supplementary Note 10]

A recording medium on which a computer program that allows a computer to execute an authentication method is recorded, the authentication method including:
authenticating a person, by using a first image that is generated by an imaging apparatus imaging the person before the person enters a target area; and
counting a number of persons staying in the target area, by using a second image that is generated by the imaging apparatus imaging the persons entering and leaving the target area.

At least a part of the constituent components of each of the example embodiments described above can be combined with at least another part of the constituent components of each of the example embodiments described above, as appropriate. A part of the constituent components of each of the example embodiments described above may not be used. Furthermore, to the extent permitted by law, all the references (e.g., publications) cited in this disclosure are incorporated by reference as a part of the description of this disclosure.

This disclosure is permitted to be changed, if desired, without departing from the essence or spirit of this disclosure which can be read from the claims and the entire identification. A focusing determination apparatus, a focusing determination method, an authentication apparatus, an authentication method, and a recording medium with such changes are also intended to be in the technical scope of this disclosure.

### Description of Reference Codes

1 Camera
2 Authentication apparatus
21 Arithmetic apparatus
211 Authentication unit
212 Unlocking control unit
213 Behavior analysis unit
3 Management server
4 Mirror
1000 Authentication apparatus
1001 Authentication unit
1002 Counting unit
1100 Imaging apparatus
1110 First image
1120 Second image
1200 Person
1300 Target area
SYS Authentication system
IMG1, IMG2 Captured image
P Customer
C Passenger cabin
DR Door
ENT Entrance

## Claims

1. An authentication apparatus comprising:
an authentication unit that authenticates a person, by using a first image that is generated by an imaging apparatus imaging the person before the person enters a target area; and
a counting unit that performs counting processing for counting a number of persons staying in the target area, by using a second image that is generated by the imaging apparatus imaging the persons entering and leaving the target area.

2. The authentication apparatus according to claim 1, wherein the counting unit starts the counting processing when authentication of the person by the authentication unit is successful, and does not start the counting processing when the authentication of the person by the authentication unit is not successful.

3. The authentication apparatus according to claim 1 or 2, wherein
a restriction unit that is configured to restrict an entry of the person to the target area, is disposed between the target area and an outside area of the target area, and
the counting unit starts the counting processing when a state of the restriction unit is an unrestricted state in which the entry of the person to the target area is not restricted, and does not start the counting processing when the state of the restriction unit is a restricted state in which the entry of the person to the target area is restricted.

4. The authentication apparatus according to claim 3, wherein
the target area includes a guest room of an accommodation facility, and
the restriction unit includes a lockable door of the guestroom.

5. The authentication apparatus according to claim 3 or 4, wherein the authentication apparatus further includes a switching unit that switches the state of the restriction unit to the restricted state, when authentication of the person by the authentication unit is successful.

6. The authentication apparatus according to any one of claims 1 to 5, wherein
the person performs a first procedure for entering the target area before entering the target area,
the person performs a second procedure for ending a use of the target area when ending the use of the target area, and
the counting unit starts the counting processing when the person completes the first procedure, and ends the counting processing when the person completes the second procedure.

7. The authentication apparatus according to claim 6, wherein
the target area includes a guest room of an accommodation facility,
the first procedure includes a check-in procedure to the accommodation facility, and
the second procedure includes a check-out procedure from the accommodation facility.

8. The authentication apparatus according to any one of claims 1 to 6, wherein
the imaging apparatus generates the second image by imaging the person through a mirror, and
the imaging apparatus generates the first image by imaging the person without through the mirror.

9. An authentication method comprising:
authenticating a person, by using a first image that is generated by an imaging apparatus imaging the person before the person enters a target area; and
counting a number of persons staying in the target area, by using a second image that is generated by the imaging apparatus imaging the persons entering and leaving the target area.

10. A recording medium on which a computer program that allows a computer to execute an authentication method is recorded, the authentication method including:
authenticating a person, by using a first image that is generated by an imaging apparatus imaging the person before the person enters a target area; and
counting a number of persons staying in the target area, by using a second image that is generated by the imaging apparatus imaging the persons entering and leaving the target area.
